(19) Europäisches Patentamt

European Patent Office

Office européen des brevets

(11) Publication number: **0 567 584 B1**

## EUROPEAN PATENT SPECIFICATION

(45) Date of publication of patent specification: **28.12.94**  (51) Int. Cl.⁵: **C08F 4/64**, C08F 10/00

(21) Application number: **92905041.7**

(22) Date of filing: **18.12.91**

(86) International application number:
**PCT/US91/09589**

(87) International publication number:
**WO 92/13009 (06.08.92 92/21)**

(54) SILICA SUPPORTED TRANSITION METAL CATALYST.

(30) Priority: **18.01.91 US 644053**

(43) Date of publication of application:
**03.11.93 Bulletin 93/44**

(45) Publication of the grant of the patent:
**28.12.94 Bulletin 94/52**

(84) Designated Contracting States:
**BE DE ES FR GB IT NL SE**

(56) References cited:
**GB-A- 2 053 939**
**US-A- 4 672 096**
**US-A- 4 849 390**

(73) Proprietor: **THE DOW CHEMICAL COMPANY**
**2030 Dow Center,**
**Abbott Road**
**Midland,**
**Michigan 48640 (US)**

(72) Inventor: **KOLTHAMMER, Brian, W., S.**
**54 Royal Oak Circle**
**Lake Jackson, TX 77566 (US)**
Inventor: **SPENCER, Lee**
**4903 Clover Lane**
**Pearland, Texas 77584 (US)**

(74) Representative: **Smulders, Theodorus A.H.J.,**
**Ir. et al**
**Vereenigde Octrooibureaux**
**Nieuwe Parklaan 97**
**NL-2587 BN 's-Gravenhage (NL)**

**Description**

The present invention pertains to silica supported transition metal catalyst components and process for polymerizing olefins in their presence.

The polymerization of ethylene and the copolymerization of ethylene with other olefins is known to be carried out by solution and suspension (slurry) polymerization processes. Advantages of the solution process include short reaction times, improved heat removal and monomer conversion for mass and energy control of polymerizations and single-phase reaction environments for controlling reaction dynamics. A most advantageous solution polymerization would be conducted at even higher reaction temperatures yet with a polymerization catalyst that yields sufficiently high molecular weight polymers with a high catalyst efficiency at these higher temperatures which lowers catalyst residues in the product an/or permits complete omission of the catalyst removal step.

In the suspension (slurry) polymerization of olefins the advantages are low pressures, low temperatures and the ability to make very high molecular weight polymers. It is advantageous to carryout these reactions with sufficiently high polymerization efficiencies such that residues from the polymerization catalyst do not have to be removed from the resulting polymer.

There are many polymerization catalysts for suspension polymerization known in the art. Hagerty et al. in U.S. Patent 4,562,169 disclose the preparation of a supported catalyst by treating a solid porous carrier having reactive OH groups such as silica in a liquid medium with an organomagnesium compound to react with the OH groups on the carrier; evaporating said liquid to precipitate magnesium onto the carrier and recovering a supported magnesium composition in the form of a dry, free-flowing powder; reacting the powder with a tetravalent titanium compound in a liquid medium. The catalyst is useful in the polymerization of olefins.

Nowlin in U.S. Patent 4,593,009 and U.S. Patent 4,672,096 discloses a catalyst for polymerizing olefins which catalyst is prepared by treating a carrier containing OH groups with an organomagnesium composition and contacting the thus-formed magnesium-containing carrier with a solution of at least one tetravalent vanadium compound or a solution containing both a vanadium compound and a titanium compound.

Gessel in U.S. 4,244,838 describes catalysts prepared from an organomagnesium compound, an organic hydroxyl-containing material and a transition metal halide. These solids produced by this reaction are isolated and washed prior to use in a polymerization.

Fuentes et al. in U.S. 4,544,647 disclose catalyst compositions prepared from an organomagnesium material, an organic hydroxyl-containing material, a reducing halide source and a transition metal compound.

Marchand et al. in U.S. 4,910,272 describe a process for polymerizing olefins in the presence of a catalyst prepared from an inorganic oxide, an organomagnesium material, an organic hydroxyl-containing material, a reducing halide source and a transition metal compound.

The catalyst efficiency of these catalysts is, in general, decreased with increased polymerization temperatures, specifically temperatures above 140 ° C.

The catalysts known for solution polymerization comprise an organomagnesium component, an aluminum halide and/or an additional halide source and a transition metal compound. Lowery et al in US 4,250,288 describes such compositions that are useful in the polymerization of α-olefins above 140 ° C.

Sakurai et al. in U.S. 4,330,646 describes similar catalysts containing a titanium or a titanium and/or a vanadium compound as the transition metal component. These catalysts are useful at polymerization temperatures of at least 180 ° C. The disadvantage of these catalysts is that the reactions that produce the catalyst solids are highly exothermic and difficult to control and reproduce. These catalyst compositions also contain a large excess of halide with respect to the transition metal component and yield polymers with a relatively high halide content. The composition as a whole is used directly in the polymerization of olefins.

It would be desirable to have available catalyst compositions which exhibit significantly higher polymerization efficiencies based on the transition metal and the halide. It would also be desirable to have available catalyst compositions which exhibit these high efficiencies while being prepared in a manner which did not require the isolation and/or washing of the solid catalytic product. It would be further desirable to ease the process of preparation of the catalyst in order to increase reproducibility and quality of the catalyst. It would also be desirable to have available such catalysts which would provide polymers having a high molecular weight and a relatively narrow molecular weight distribution and which exhibit more tolerance to hydrogen at polymerization temperatures of at least 180 ° C and even greater than 200 ° C.

One aspect of the present invention pertains to a supported transition metal catalyst component which comprises an inert liquid medium having slurried therein a composition comprising the product resulting from contacting (1) a porous solid inorganic oxide support material selected from the group consisting of

2

silica, alumina, or a combination of silica and alumina, said support material containing not greater than 5 millimoles of hydroxyl groups per gram of support material and a particle size not greater than 10 $\mu$m and a surface area of from 50 to 800 m$^2$/g; (2) a hydrocarbon soluble organomagnesium alkoxide or hydrocarbon soluble magnesium dialkoxide; (3) a titanium compound; optionally (4) a vanadium compound; and (5) a Group IIIA metal alkyl halide: and wherein the components are employed in amounts which provide the atomic ratios given in claim 1, and preferably the following atomic ratios:

Si + Al (from the inorganic oxide support):Mg of from 1:1 to 30:1;

Mg:Ti of from 0.2:1 to 10:1;

Mg:V of from 0:1 to 10:1;

Mg:IIIA metal of from 0.05:1 to 5:1; and

V:Ti of from 0:1 to 5:1.

Another aspect of the present invention pertains to a process for preparing a supported transition metal catalyst component slurried in an inert liquid medium, which process comprises (A) forming in an inert atmosphere which excludes oxygen and moisture a slurry of (1) a porous inorganic oxide support material selected from the group consisting of silica, alumina, or a combination of silica and alumina, said support material containing not greater than 5 millimoles of hydroxyl groups per gram of support material and a particle size not greater than 10 $\mu$m and a surface area of from 50 to 800 m$^2$/g in an inert organic liquid medium; (B) mixing said slurry with (2) a hydrocarbon soluble organomagnesium alkoxide or hydrocarbon soluble magnesium dialkoxide and stirring the resulting mixture at a temperature of from 20°C to 120°C for a time sufficient to saturate the surface of the support material; (C) mixing the product from (B) with (3) a titanium compound or a combination of a titanium compound and (4) a vanadium compound or adding the titanium compound and vanadium compound separately and stirring the resultant mixture at a temperature of from 20°C to 120°C for a time sufficient to allow complete reaction of the titanium compound and the vanadium compound with the organomagnesium moieties remaining on the solid support; (D) mixing the product from (C) with an inert organic solution of (5) a Group IIIA metal alkyl halide at a temperature of from 20°C to 120°C for a time sufficient to complete the reduction of the titanium and vanadium, if present, compounds to their final oxidation state.

A further aspect of the present invention pertains to a process for polymerizing one or more $\alpha$-olefins and optionally one or more polymerizable ethylenically unsaturated compounds other than an $\alpha$-olefin which process comprises contacting the materials to be polymerized with (A) a supported transition metal containing catalyst component comprising the product resulting from contacting (1) a porous inorganic oxide support material selected from the group consisting of silica, alumina, or a combination of silica and alumina, said support material containing not greater than 5 millimoles of hydroxyl groups per gram of support material and a particle size less than 10 $\mu$m and a surface area of from 50 to 800 m$^2$/g; (2) a hydrocarbon soluble organomagnesium alkoxide or hydrocarbon soluble magnesium dialkoxide; (3) a titanium compound;

optionally (4) a vanadium compound; and (5) a Group IIIA metal alkyl halide; and wherein the components are employed in amounts which provide the atomic ratios given in Claim 1, and preferably the following atomic ratios:

Si + Al:Mg of from 1:1 to 30:1;

Mg:Ti of from 0.2:1 to 10:1;

Mg:V of from 0.2:1 to 10:1;

Mg:IIIA metal of from 0.05:1 to 5:1;

V:Ti of from 0:1 to 5:1; and

(B) a cocatalyst or activator for component (A).

The present invention provides catalyst compositions which exhibit high polymerization efficiencies based on the transition metal and the halide and are prepared in a manner which do not require the isolation and/or washing of the solid catalytic product. The catalysts which contain vanadium produce a polymer having a high molecular weight and a relatively narrow molecular weight distribution when the polymers are prepared by the solution process.

The present invention provides catalyst compositions which exhibit high polymerization efficiencies based on the transition metal and the halide and are prepared in a manner which do not require the isolation and/or washing of the solid catalytic product. The catalysts which contain vanadium produce a polymer having a relatively broad molecular weight distribution when the polymers are prepared by the slurry process.

All references herein to elements or metals belonging to a certain Group refers to the Periodic Table Of The Elements published by the Sargent-Welch Scientific Company, Skokie Illinois, catalog number S-18806 (1968).

The term hydrocarbyl as employed herein means any aliphatic, cycloaliphatic, aromatic, aryl substituted aliphatic, aryl substituted cycloaliphatic, aliphatic substituted aromatic or aliphatic substituted cycloaliphatic groups.

The term hydrocarbyloxy means a hydrocarbyl group having an oxygen linkage between it and the carbon atom to which it is attached.

PREPARATION OF TRANSITION METAL CATALYST COMPONENT

The transition metal catalyst component of the present invention can be prepared in the following manner.

The porous inorganic oxide support material is slurried in an inert organic diluent under conditions which exclude oxygen (air) and moisture at a temperature of from 20°C to 120°C, preferably from 0°C to 100°C, more preferably from 20°C to 70°C. No particular time is required other than that to form a uniform slurry of the support in the diluent. This depends upon the amounts involved, but usually a good uniform slurry can be formed in 1 hour in a concentration range from 0.1 to 15, preferably from 0.5 to 10, more preferably from 1 to 7, weight percent.

To this slurry is then added the hydrocarbon soluble magnesium alkoxide or hydrocarbon soluble dialkoxide, again under conditions which exclude oxygen (air) and moisture, and the mixture stirred at a temperature of from -20°C to 120°C, preferably from 0°C to 100°C, more preferably from 20°C to 70°C for a time sufficient to react the magnesium compound with surface of the solid support, usually from 0.1 to 10, preferably from 0.2 to 8, more preferably from 0.5 to 4, hours.

After the above addition of the magnesium compound, a titanium compound or a combination of a titanium compound and a vanadium compound is added, again under conditions which excludes oxygen (air) and moisture, and the mixture stirred at a temperature of from -20°C to 120°C, preferably from 0°C to 100°C, more preferably from 20°C to 70°C for a time sufficient to completely react the titanium compound and the vanadium compound with the reactive silica and magnesium functionalities, usually from 0.1 to 100, preferably from 0.5 to 20, more preferably from 1 to 10, hours. The titanium and vanadium compounds can be premixed prior to their addition or they can be added separately in any order to the product resulting from blending the magnesium compound with the slurry of the inorganic oxide support material.

Following the addition and mixing of the titanium and/or vanadium compounds, a Group IIIA metal alkyl halide is added and the mixture is stirred at a temperature of from 20°C to 120°C, preferably from 0°C to 100°C, more preferably from 20°C to 70°C for a time sufficient to reduce the titanium compound and vanadium compound, if present, to their final oxidation states, usually from 1 to 100, preferably from 2 to 50, more preferably from 5 to 20, hours.

Upon completion of the addition and mixing of the Group IIIA metal alkyl halide, the thus formed transition metal catalyst component can be employed in the polymerization of $\alpha$-olefins as is without isolation of the solid components from the liquid components. The transition metal catalyst component can be employed immediately upon its preparation or the component can be stored under inert conditions for some length of time. usually for periods of time as long as 90 days.

The components can also, if desired, be added in the order as follows: $SiO_2$ + Mg compound + Ti compound + Al compound + V compound.

The components can also, if desired, be added in the order as follows: $SiO_2$ + Mg compound + Al compound + Ti compound + V compound.

Oxygen (air) and moisture can be excluded during catalyst preparation by conducting the preparation in an inert atmosphere such as, for example, nitrogen, argon, xenon, methane or any combination thereof.

COMPONENTS OF THE TRANSITION METAL CATALYST COMPONENT

Porous Support Material

Suitable porous silica or alumina support materials which can be employed herein include, those containing not greater than 5, preferably not greater than 4, more preferably not greater than 3, millimoles of hydroxyl groups (OH) per gram of support material. These hydroxyl (OH) groups are isolated silanol groups on the silica surface.

The hydroxyl groups can be reduced or eliminated by treating the support material either thermally or chemically. Thermally, the support material can be heated at temperatures of from about 250°C to 870°C, more preferably from 600°C to 800°C for a time sufficient to reach the equilibrium hydroxyl group concentration, usually from 1 to 24, preferably from 2 to 20, more preferably from 3 to 12, hours.

4

The hydroxyl (OH) groups can be removed or reduced chemically by treating the support material with $SiCl_4$, chlorosilanes, silylamines, or any combination thereof at a temperature of from 20°C to 120°C, more preferably from 0°C to 40°C for a time sufficient to reduce the hydroxyl content to the desired value, usually less than 30 minutes.

The porous support material has a particle size of not greater than 10, preferably from 0.1 to 10, more preferably from 1 to 9, most preferably from 2 to 8, microns and a surface area in the range of from 50 to 800, preferably from 150 to 600, more preferably from 300 to 500, $m^2/g$.

The particle size of the support is important as it has surprisingly been discovered that lowering the particle size of the support below 10 microns while maintaining the support surface area and porosity results in an unexpected increase in the catalyst productivity and hence a reduction in product chloride and titanium residues relative to products of the same catalyst made on a support of equivalent surface area and porosity but larger particle size.

Inert Liquid Diluent

Suitable inert liquid diluents which can be employed to slurry the inorganic oxide support material and as a diluent for any of the other components employed in the preparation of the catalyst include, for example, aliphatic hydrocarbons, aromatic hydrocarbons, naphthinic hydrocarbons, or any combination thereof. Particularly suitable solvents include, for example, pentane, isopentane, hexane, heptane, octane, isooctane, nonane, isononane, decane, cyclohexane, methylcyclohexane, toluene, any combination of any two or more of such diluents.

Organomagnesium Compound

Suitable magnesium compounds which can be employed in the preparation of the transition metal catalyst component include, for example, those hydrocarbon soluble organomagnesium compounds represented by the formulas $R_xMg(OR)y$; wherein each R is independently a hydrocarbyl group having from 1 to 20, preferably from 1 to 10, more preferably from 2 to 8, carbon atoms; $x + y = 2$: and $0.5 \le y \le 2$. Preferably, x has a value of zero or 1 and y has a value of 1 or 2 and most preferably, x has a value of 1 and y has a value of 2. Particularly suitable magnesium compounds include, for example, n-butylmagnesium butoxide, ethylmagnesium butoxide, butylmagnesium ethoxide, octylmagnesium ethoxide, butylmagnesium i-propoxide, ethylmagnesium i-propoxide, butylmagnesium n-propoxide, ethylmagnesium n-propoxide, s-butylmagnesium butoxide, butylmagnesium 2,4-dimethylpent-3-oxide, n-butylmagnesium octoxide, s-butylmagnesium octoxide, or any combination thereof.

Also suitable are the hydrocarbon soluble reaction product (dialkoxide) of a magnesium dihydrocarbyl $(MgR_2)$ compound and an oxygen-containing compound (ROH) such as, for example, an aliphatic or cycloaliphatic or acyclic $C_5$-$C_{18}$ beta or gamma alkyl-substituted secondary or tertiary monohydric alcohol, as disclosed by Kamienski in U.S. Patent 4,748,283 which is incorporated by reference. The reaction is preferably conducted in the presence of a liquid hydrocarbon media. The alcohol is usually employed in slightly more than twice the molar equivalent, based on magnesium. The reaction is usually conducted at temperatures not in excess of 50°C, preferably below 40°C. Particularly suitable oxygen containing compounds include, for example, 2,4-dimethyl-3-pentanol, 2,3-dimethyl-2-butanol, 2,4-dimethyl-3-hexanol, 2,6-dimethyl-4-heptanol, 2,6-dimethyl-cyclohexanol, or any combination thereof. Particularly suitable magnesium dialkyl compounds include, for example, butylethylmagnesium, dibutylmagnesium, dihexylmagnesium, butyloctylmagnesium, or any combination thereof.

Titanium Compound

Suitable titanium compounds which can be employed in the preparation of the transition metal catalyst component include, for example, those represented by the formula $TiX_{4-a}(OR')_a$; wherein each R' is independently an alkyl group having from 1 to 20, preferably from 1 to 10, more preferably from 2 to 8, carbon atoms; X is a halogen atom, preferably chlorine; and a has a value from zero to 4. Particularly suitable titanium compounds include, for example, titanium tetrachloride $(TiCl_4)$, titanium tetraisopropoxide $(Ti(O\text{-}i\text{-}C_3H_7)_4)$, titanium tetraethoxide $(Ti(OC_2H_5)_4)$, titanium tetrabutoxide $(Ti(OC_4H_9)_4)$, titanium triisopropoxidechloride $(Ti(O\text{-}i\text{-}C_3H_7)_3Cl)$, or any combination thereof.

## Vanadium Compound

In the solution process, when it is desirable to produce α-olefin polymers which have a high molecular weight and a relatively narrower molecular weight distribution than that produced with the catalyst component containing only titanium as the transition metal, a vanadium compound can be added as a portion of the transition metal component during preparation of the catalyst. A narrowing of the molecular weight distribution is indicated by a lowering of the $I_{10}/I_2$ value of the polymer.

By the term "relatively narrow molecular weight distribution" it is meant that the resulting polymer produced in the presence of a catalyst component containing both titanium and vanadium has a narrower molecular weight distribution than the polymer produced under similar conditions with a similar catalyst component prepared without the vanadium component.

In the slurry process when it is desirable to produce α-olefin polymers which have a high molecular weight and a relatively broad molecular weight distribution than that produced with the catalyst component containing only titanium as the transition metal, a vanadium compound can be added as a portion of the transition metal component during preparation of the catalyst component. A broadening of the molecular weight distribution is indicated by an increase of the $I_{20}/I_2$, high load melt flow ratio (HLMFR), value of the polymer.

By the term "relatively broad molecular weight distribution" it is meant that the resulting polymer produced in the presence of a catalyst containing both titanium and vanadium has a broader molecular weight distribution than the polymer produced under similar conditions with a similar catalyst component prepared without the vanadium component.

Suitable vanadium compounds which can be employed in the preparation of the transition metal catalyst include, for example, those represented by the formulas $VX_4$ and $V(O)X_3$; wherein each X is independently OR or a halogen atom, preferably chlorine; each R is independently an alkyl group having from 1 to 20, preferably from 2 to 8, more preferably from 2 to 4, carbon atoms. Particularly suitable vanadium compounds include, for example, vanadium tetrachloride ($VCl_4$), vanadium trichloride oxide ($V(O)Cl_3$), vanadium triisopropoxide oxide ($V(O)(O\text{-}i\text{-}C_3H_7)_3$), vanadium triethoxide oxide ($V(O)(OC_2H_5)_3$), or any combination thereof.

## Organo Halide Compounds of a Group IIIA Metal

Suitable organo halide compounds of a group IIIA Metal which can be employed in the preparation of the transition metal catalyst component include, for example, those represented by the formula $R'_yMX_z$; wherein M is a metal from Group IIIA of the Periodic Table of the Elements, preferably aluminum or boron; each R' is independently an alkyl group having from 1 to 20, preferably from 1 to 10, more preferably from 2 to 8, carbon atoms; X is a halogen atom, preferably chlorine; y and z each independently have a value from 1 to a value equal to the valence of M minus 1 and y + z has a value equal to the valence of M. Particularly suitable such organo halide compounds include, for example, ethylaluminum dichloride, ethylaluminum sesquichloride, diethylaluminum chloride, isobutylaluminum dichloride, diisobutylaluminum chloride, octylaluminum dichloride, or any combination thereof.

## Component Amounts

For use in the solution process, the components are employed in quantities which provide an atomic ratio as follows:

Si and/or Al(from the inorganic oxide support):Mg of from 1:1 to 50:1, preferably from 2:1 to 40:1, more preferably from 4:1 to 20:1;

Mg:group IIIA metal of from 0.01:1 to 100:1, preferably from 0.05:1 to 10:1, more preferably from 0.1:1 to 5:1.

Mg:Ti of from 0.05:1 to 40:1, preferably from 0.1:1 to 20:1, more preferably from 0.2:1 to 10:1;

Mg:V, when V is present, of from 0.05:1 to 40:1, preferably from 0.1:1 to 20:1, more preferably from 0.2:1 to 10:1;

V:Ti of from 0:1 to 20:1, preferably from 0.1:1 to 10:1, more preferably from 0.2:1 to 5:1.

For use in the suspension (slurry) process, the components are employed in quantities which provide an atomic ratio as follows:

Si and/or Al(from the inorganic oxide support):Mg of from 1:1 to 50:1, preferably from 2:1 to 40:1, more preferably from 4:1 to 20:1;

Mg:group IIIA metal of from 0.01:1 to 100:1, preferably from 0.05:1 to 10:1, more preferably from 0.1:1 to 5:1.

Mg:Ti of from 0.05:1 to 40:1, preferably from 0.1:1 to 20:1, more preferably from 0.2:1 to 10:1;

Mg:V, when V is present, of from 0.05:1 to 40:1, preferably from 0.1:1 to 20:1, more preferably from 0.2:1 to 10:1;

V:Ti, when V is present, of from 0:1 to 20:1, preferably from 0:1 to 10:1, more preferably from 0:1 to 3:1.

The compound employed as the liquid medium can be employed in any amount which provides the catalyst component with the desired consistency which does not interfere with the polymerization behavior of the catalyst.

## COCATALYST or ACTIVATOR

The transition metal catalyst component described above requires a cocatalyst or activator in order to efficiently polymerize the $\alpha$-olefin monomer(s). Suitable cocatalysts or activator compounds include, for example, Group IIIA metal alkyl, metal alkoxide or metal alkyl halide compounds, particularly $C_1$-$C_{10}$ alkyl compounds of aluminum. Particularly suitable such compounds include, for example, triethylaluminum, trimethylaluminum, triisobutylaluminum, trihexylaluminum, trioctylaluminum, diethylaluminum chloride, diethylaluminum ethoxide, or any combination of any two or more of such compounds.

Also suitable are the aluminoxanes such as those represented by the formula $(Al(O)R)_x$; wherein R is an alkyl group having from 1 to 8 carbon atoms and x has a value greater than 4. Particularly suitable aluminoxanes include, for example, methylaluminoxane, hexaisobutyltetraluminoxane, or any combination of any two or more of such compounds. Also, mixtures of these aluminoxanes with alkyl aluminum compounds such as, for example, triethylaluminum or tributylaluminum can be employed.

The cocatalyst or activator compound can be employed in the solution process in amounts which provide a ratio of atoms of Group IIIA metal per combined atoms of Ti and V of from 0.1:1 to 50:1, preferably from 1:1 to 20:1, more preferably from 2:1 to 15:1.

The cocatalyst or activator compound can be employed in the suspension (slurry) process in amounts which provide a ratio of atoms of Group IIIA metal per combined atoms of Ti and V of from 1:1 to 1000:1, preferably from 5:1 to 500:1, more preferably from 10:1 to 200:1.

## POLYMERIZABLE MONOMERS

Suitable polymerizable monomers include, for example $\alpha$-olefins having from 2 to 20, preferably from 2 to 12, more preferably from 2 to 8, carbon atoms and any combination of any two or more of such $\alpha$-olefins. Particularly suitable such $\alpha$-olefins include, for example, ethylene, propylene, 1-butene, 1-pentene, 4-methylpentene-1, 1-hexene, 1-heptene, 1-octene, 1-nonene, 1-decene, 1-undecene, 1-dodecene, 1-tridecene, 1-tetradecene, 1-pentadecene, or any combination thereof. Preferably, the $\alpha$-olefins are ethylene, propene, 1-butene, 4-methyl-pentene-1, 1-hexene, 1-octene, and combination of any two or more of such $\alpha$-olefins.

## POLYMERIZATION

The catalyst components of the present invention can be advantageously employed in the polymerization of monomers by the solution or slurry process. The slurry process is employed at temperatures of from 0°C up to a temperature just below the temperature at which the resulting polymer becomes soluble in the inert polymerization medium, preferably at temperatures of from 60°C to 105°C, more preferably from 80°C to 95°C. The solution process is employed at temperatures from the temperature at which the resulting polymer is soluble in the inert reaction medium up to 275°C, preferably at temperatures of from 145°C to 260°C, more preferably from 180°C to 240°C.

The polymerization can be employed at pressures of from 1 to 2,000, preferably from 5 to 500, more preferably from 10 to 50, atmospheres.

Molecular weight control agents such as hydrogen can be employed in the manner known to those skilled in the art of polymerizing $\alpha$-olefins. Usually the greater the amount of hydrogen or terminating agent employed the lower the molecular weight of the resulting polymer. The hydrogen is employed in that quantity which will provide the resulting polymer with the desired molecular weight as indicated by the desired $I_2$ value.

The solution polymerization can be employed in the presence of any suitable inert reaction medium such as, for example, aromatic hydrocarbons, aliphatic hydrocarbons, naphthinic hydrocarbons, or any combination thereof. Particularly suitable inert reaction medium include, for example, hexane, heptane, octane, isooctane, nonane, isononane, decane, undecane, dodecane, tridecane, tetradecane, cyclohexane, methylcyclohexane, or any combination thereof.

The suspension (slurry) polymerization can be employed in the presence of any suitable inert reaction medium such as, for example, aromatic hydrocarbons, aliphatic hydrocarbons, naphthinic hydrocarbons, liquified $\alpha$-olefins, liquified hydrocarbons, or any combination thereof. Particularly suitable inert reaction medium include, for example, isobutane, isopentane, pentane, hexane, heptane, octane, isooctane, nonane, isononane, decane, cyclopentane, cyclohexane, or any combination thereof.

The following examples are illustrative of the invention, but are not to be construed as to limiting the scope thereof in any manner.

The following components were employed in the examples and comparative experiments.

Silica Support #1 is a silica having a mean particle size of $3\mu$ ($1\mu$ = $1\mu$m), a surface area of 337 m$^2$/g, subjected to heating in a fluidized bed under a nitrogen atmosphere at 600°C for 12 hours resulting in a silica support material having a hydroxyl content of 3.2 millimoles/gram.

Silica Support #2 is a silica having a mean particle size of $70\mu$, a surface area of 310 m$^2$/g, subjected to heating in a fluidized bed under a nitrogen atmosphere at 600°C for 12 hours resulting in a silica support material having a hydroxyl content of 1.9 millimoles/gram.

Silica Support #3 is a sieve fraction of a silica having a mean particle size of $145\mu$, a surface area of 310 m$^2$/g, subjected to heating in a fluidized bed under a nitrogen atmosphere at 800°C for 12 hours resulting in a silica support material having a hydroxyl content of 1.8 millimoles/gram.

Silica Support #4 is a sieve fraction of a silica having a mean particle size of $85\mu$, a surface area of 310 m$^2$/g, subjected to heating in a fluidized bed under a nitrogen atmosphere at 800°C for 12 hours resulting in a silica support material having a hydroxyl content of 1.8 millimoles/gram.

Silica Support #5 is a sieve fraction of a silica having a mean particle size of $40\mu$, a surface area of 310 m$^2$/g, subjected to heating in a fluidized bed under a nitrogen atmosphere at 800°C for 12 hours resulting in a silica support material having a hydroxyl content of 1.8 millimoles/gram.

Silica Support #6 is a sieve fraction of a silica having a mean particle size of $3\mu$, a surface area of 310 m$^2$/g, subjected to heating in a fluidized bed under a nitrogen atmosphere at 800°C for 12 hours resulting in a silica support material having a hydroxyl content of 1.8 millimoles/gram.

Silica Support #7 is a small size silica having a mean particle size of $3\mu$, a surface area of 430 m$^2$/g, subjected to heating in a rotary kiln under a nitrogen atmosphere at 800°C for 5 hours resulting in a silica support material having a hydroxyl content of 2.8 millimoles/gram.

ISOPAR™ E is a fractionated isoparaffinic solvent having a boiling range of 113-143°C available from Exxon Corporation.

The polymer properties were obtained by the following methods.

I$_2$ by ASTM D 1230-86 condition "E".
I$_{10}$ by ASTM D 1230-86 condition "N".
I$_{20}$ by ASTM D 1230-86 condition "F".
Density by ASTM D 1248-84.

Polymerization (Solution Conditions)

A stirred, one-gallon (3.79L) autoclave reactor was charged with two liters of ISOPAR™ E and the required amount of the alpha-olefin comonomer, octene-1, in an amount such that its molar concentration in the reactor was 0.99M before heating to the desired temperature. The required amount of hydrogen, 2 psig (13.8 kPa), was then added to the reactor followed by ethylene sufficient to bring the total pressure to 450 psig (3,103 kPa). An amount of the activated catalyst was injected into the reactor. The reactor temperature and pressure were maintained constant at the initial pressure and temperature, as indicated, by continually feeding ethylene during the polymerization run and cooling the reactor as necessary. After a 10 minute reaction time (unless otherwise indicated), the ethylene was shut off and the hot solution transferred into a nitrogen-purged resin kettle. After drying, the samples were then weighed to determine catalyst efficiencies followed by melt flow and density measurements via standard procedures.

Polymerization (Slurry Conditions)

A stirred, 1.4 liter autoclave reactor was charged with 700 mL of ISOPAR™ E before heating to the desired temperature. The vapor space was swept with hydrogen and then hydrogen was added to the reactor until the desired partial pressure was reached. This was followed by ethylene sufficient to bring the

EP 0 567 584 B1

total pressure to 175 psig (1,207 kPa). An amount of the activated catalyst as described under preparation of activated catalyst was injected into the reactor. The reactor temperature and pressure were maintained constant at the initial pressure and temperature by continually feeding ethylene during the polymerization run and cooling the reactor as necessary. After a 45 minute reaction time (unless otherwise indicated), the ethylene was shut off and the polymer slurry transferred into a nitrogen-purged resin kettle. After drying, the samples were then weighed to determine catalyst efficiencies followed by melt flow and density measurements.

**EXAMPLE 1**

A. Preparation of Transition Metal Catalyst Component

To 1 g of Silica Support #1 slurried in 50 ml of ISOPAR™ E was added the required amount of butyloctylmagnesium ethoxide (BOMAG-O from Schering A.G.). The resulting slurry was stirred for 1 hour after which an amount of titanium tetrachloride (TiCl4) was added. The slurry rapidly darkens to a deep brown color and was stirred for a further two hours. An aliquot of a solution of 25percent ethylaluminum dichloride was then added and and the final mixture stirred for 17 hours. The complete mixtures prepared in this manner were used without further isolation or washing. The catalysts have the atomic ratios as indicated in Table I.

B. Preparation of Activated Catalyst

An activated catalyst was prepared by slurrying 4 mL of the transition metal catalyst component in 40 mL of ISOPAR™ E in a 100 mL septum-capped bottle in a glove box. To this mixture was added the required amount of 0.15 M solution of triethylaluminum in hexane as a cocatalyst or activator. The resulting slurry was made up to 50 mL total volume with ISOPAR™ E and the mixture injected into the batch reactor to effect the polymerization.
The atomic ratio of Al from the cocatalyst to titanium is provided in Table I.

C. Polymerization (Solution Conditions)

The polymerization procedure under solution conditions was employed at a polymerization temperature of 185°C. The catalyst efficiency is provided in Table I.

D. (Comparative)

A catalyst was prepared as described in U.S. Patent 4,562,169 in the following manner.
Davison Silica Gel, Grade 952, was dehydroxylated by fluidizing with nitrogen and heating at 800°C for 12 hours and cooled to room temperature under nitrogen.
10 grams of the activated silica was slurried in 100 mL of anhydrous degassed hexane, brought to a reflux temperature of 60°C and 7 mL of a 2.6 M solution of ethylmagnesium chloride in tetrahydrofuran (THF) added slowly followed by further refluxing for 120 minutes. The solvents were removed by distillation and the silica dried at 80°C under a nitrogen purge.
This product was slurried with a premixed solution of 6 mL of TiCl4 dissolved in 100 mL of Isopar™ E and the slurry stirred at 50°C for two hours. This mixture was allowed to cool to room temperature and the solids washed twice with 100 mL portions of Isopar™ E and twice with 100 mL portions of hexane and dried under a nitrogen purge to yield a tan colored free-flowing powder. Analysis of the powder indicated that it contained 1.3 mmol/g Mg/g catalyst, 0.9 mmol Ti/g catalyst and 4.5 mmol Cl/g catalyst. The catalyst was then combined with triethylaluminum (TEA) activator (cocatalyst) by slurrying 2 g of the dry catalyst in 40 ml of Isopar™ E in a 4 oz (118.3 mL) septum capped bottle in a glove box. A 2 mL aliquot of this solution was transferred to a second bottle to which was added the required amount of a 0.15 M solution of triethylaluminum in hexane followed by an additional 20 mL of Isopar™ E. The required amount of this slurry was then injected into a batch reactor to effect the polymerization under solution conditions at 175°C as described earlier. The catalyst efficiency and product data are shown in Table I.

9

Table I

| Run No. | Catalyst Source | mmol Mg | mmol Ti | mmol Al | mmol Cl | Atomic Ratio Mg/Al[a]/Cl/Ti | Atomic Ratio of Al[b]/Ti | Efficiency (Kg Polymer per gram Ti or Cl) | |
|---|---|---|---|---|---|---|---|---|---|
| | | | | | | | | Ti | Cl |
| A | Ex 1-B | 1.4 | 0.4 | 4.5 | 10.6 | 3.5/11.3/26.5/1 | 11/1 | 478 | 24 |
| B | Ex 1-B | 1.9 | 0.4 | 4.5 | 10.6 | 4.8/11.3/26.5/1 | 6/1 | 627 | 28 |
| C | Ex 1-B | 1.8 | 0.2 | 3.5 | 9.4 | 3.0/5.8/15.7/1 | 5/1 | 413 | 27 |
| D | ex 1-D | 1.3 | 0.9 | --- | 4.5 | ------- | 5/1 | 30 | 8 |

a Aluminum from transition metal catalyst component.

b Aluminum from cocatalyst.

## EXAMPLE 2

**A.** Preparation of Transition Metal Catalyst Component

To a 1 g sample of the support designated in Table II slurried in 50 mL of ISOPAR™ E was added 2.0 mmol of butylethylmagnesium butoxide (BEMB from Texas Alkyls Inc.). The mixture was stirred for one hour and treated sequentially with 1.0 mmol $TiCl_4$ and 1.0 mmol $V(O)Cl_3$ as a neat mixture and 6.0 mmol of ethylaluminum dichloride (4.0 mL of a 1.5 M solution in hexane). The mixture was diluted to 100 mL total volume and then stirred for 24 hours. The atomic ratios of the components in the transition metal complex were Mg/Al/Cl/Ti/V was 2/6/19/1/1. The catalyst components were activated (use of cocatalyst) according to

10

the procedure described in Example 1 employing Al (activator)/Ti ratio of 8/1.

B. Polymerization

The polymerizations were conducted under solution process conditions at 185 °C. The results of the polymerization reactions are shown in Table II.

Table II

| Effect of Silica Particle Size on Solution Polymerizations | | | | | | |
|---|---|---|---|---|---|---|
| Run No. | Support | | Density g/cc | $I_2$ | Efficiency (Kg Polymer per gram Ti or Cl) | |
| | No. | Size $\mu$ | | | Ti | Cl |
| A* | 3 | 145 | 0.9080 | 1.16 | 49 | 30 |
| B* | 5 | 40 | 0.9119 | 1.05 | 499 | 35 |
| C | 6 | 3 | 0.9159 | 1.13 | 842 | 60 |

* Not an example of the present invention.

**EXAMPLE 3**

A. Preparation of Transition Metal Catalyst Component

To 1 g of the indicated silica support of different mean particle sizes slurried in 50 ml of ISOPAR™ E was added 2.0 mmol of butylethylmagnesium butoxide (BEMB from Texas Alkyls Inc). The resulting slurry was stirred for 1 hour after which 0.20 mmol of titanium tetraisopropoxide was added. The slurry was stirred for a further two hours. An aliquot of a solution of 25percent ethylaluminum dichloride (4.0 mmol Al) was then added and the final mixture stirred for 17 hours. The complete mixtures prepared in this manner were used without further isolation or washing. The atomic ratios of Mg/Al/Cl/Ti were 10/20/40/1.

The catalysts were activated with triisobutylaluminum at an atomic ratio of Al/Ti of 100/1 by the procedure described in Example IB.

B. Polymerization

The polymerizations were conducted under slurry conditions using a hydrogen to ethylene ratio of 1:1 and a reactor temperature of 85 °C. The results of the polymerization reactions are shown in Table III.

Table III. Effect of Silica Particle Size on Slurry Polymerizations

| Run No. | Catalyst Support | | Atomic Ratios | | | $I_2$ | $I_{20}/I_2$ | Efficiency (Kg Polymer per gram of Ti or Cl) | |
| | # | Size (μ) | Transition Metal Catalyst Component | | Cocat. Al/Ti | | | Ti | Cl |
| | | | Mg/Al/Cl/Ti | Si/Mg | | | | | |
| A* | 3 | 145 | 10/20/40/1 | 8.3 | 100:1 | 0.40 | 42.8 | 531 | 18 |
| B* | 4 | 85 | 10/20/40/1 | 8.3 | 100:1 | 0.33 | 34.7 | 727 | 24 |
| C* | 5 | 40 | 10/20/40/1 | 8.3 | 100:1 | 0.48 | 36.9 | 575 | 19 |
| D | 6 | 3 | 10/20/40/1 | 8.3 | 100:1 | 0.37 | 38.7 | 1,500 | 51 |
| E | 7 | 3 | 10/20/40/1 | 8.3 | 100:1 | 0.30 | 34.2 | 1,510 | 51 |

* Not an example of the present invention.

## EXAMPLE 4

A. Preparation of Transition Metal Catalyst Component

To 1 g of Silica Support #7 slurried in 50 ml of ISOPAR™ E was added 2.0 mmol of butylethylmagnesium butoxide (BEMB from Texas Alkyls Inc). The resulting slurry was stirred for 1 hour after which 0.20 mmol of titanium tetrachloride (TiCl₄) was added. The slurry rapidly darkens to a deep brown color and was stirred for a further two hours. An aliquot of a solution containing an alkylaluminum chloride (3.5 mmol Al) was then added and the final mixture stirred for 17 hours. The complete mixtures prepared in this manner were used without further isolation or washing.

The catalysts were activated with triisobutylaluminum at a ratio of Al/Ti of 100/1 employing the procedure of Example 1B.

## B. Polymerization

The polymerizations were conducted under slurry conditions using a hydrogen to ethylene ratio of 1:1, a reactor temperature of 85 °C and a polymerization time of one hour. The results of the polymerization reactions are shown in Table IV.

Table IV. Effect of different Alkylaluminum Halides

| Run No. | Aluminum Source | Atomic Ratios | | | Efficiency (Kg PE per gram of Ti or Cl) | | $I_2$ | $I_{20}/I_2$ |
| | | Catalyst | | Cocat. | | | | |
| | | Mg/Al/Cl/Ti | Si/Mg | Al/Ti | Ti | Cl | | |
|---|---|---|---|---|---|---|---|---|
| A | EtAlCl$_2$[a] | 10/17.5/39/1 | 8.3 | 100/1 | 1,150 | 40 | 0.71 | 24.7 |
| B | Et$_3$Al$_2$Cl$_3$[b] | 10/17.5/30.3/1 | 8.3 | 100/1 | 986 | 44 | 0.80 | 31.8 |
| C | iBuAlCl$_2$[c] | 10/17.5/39/1 | 8.3 | 100/1 | 1,010 | 38 | 0.69 | 30.0 |

a Ethylaluminum dichloride.
b Ethylaluminum sesquichloride.
c Isobutylaluminum dichloride.

EP 0 567 584 B1

**EXAMPLE 5**

A. Preparation of Transition Metal Catalyst Component

To 1 g of Silica Support #7 slurried in 50 ml of ISOPAR™ E was added 2.0 mmol of butylethylmagnesium butoxide (BEMB from Texas Alkyls Inc). The resulting slurry was stirred for one hour after which an amount of titanium tetraisopropoxide was added. The slurry was stirred for a further two hours. An aliquot of a solution of 25percent ethylaluminum dichloride in hexane was then added and and the final mixture was stirred for 17 hours. The complete mixtures prepared in this manner were used without further isolation or washing.

The catalysts were activated with triisobutylaluminum at the ratio given in Table V.

B. Polymerization (Slurry Conditions)

The polymerization was conducted under slurry polymerization conditions employing a temperature of 85°C, a hydrogen to ethylene ratio of 1:1 and a polymerization time of one hour.

The results are shown in Table V.

Table V. Effect of Varying Amount of Titanium and Cocatalyst

| Run No. | Atomic Ratios | | | Efficiency (Kg PE per gram of Ti or Cl) | |
|---|---|---|---|---|---|
| | Catalyst | | Cocat. | | |
| | Mg/Al/Cl/Ti | Si/Mg | Al/Ti | Ti | Cl |
| A | 6.7/15/30/1 | 8.3/1 | 25/1 | 1,150 | 52 |
| B | 6.7/11.7/23.3/1 | 8.3/1 | 100/1 | 1,100 | 64 |
| C | 10/35/70/1 | 8.3/1 | 100/1 | 2,140 | 41 |

**EXAMPLE 6**

A. Preparation of Transition Metal Catalyst Component

To 1 g of Silica Support #7 slurried in 50 ml of ISOPAR™ E was added 2.0 mmol of butylethylmagnesium butoxide (BEMB from Texas Alkyls Inc). The resulting slurry was stirred for 1 hour after 0.20 mmol of titanium tetraisopropoxide ($Ti(O-iC_3H_7)_4$) was added. The slurry was stirred for a further two hours. An aliquot of a solution of 25percent ethylaluminum dichloride (4.5 mmol) was then added and the final mixture stirred for 17 hours. The complete mixtures prepared in this manner were used without further isolation or washing. The atomic ratio for the catalysts are given in Table VI.

The catalysts were activated with triisobutylaluminum at an Al/Ti ratio of 200:1.

B. Polymerization (Slurry Conditions)

The polymerization was conducted under slurry polymerization conditions employing a temperature of 85°C, a hydrogen to ethylene ratio of as indicated in the Table, a pressure of 170 psi (1,172 kPa), and a polymerization time of one hour. Various solvents were employed as the polymerization medium. The results are given in Table VI.

14

Table VI. Use of Different Solvents as a Polymerization Medium and different Hydrogen to Ethylene Ratios.

| Run No. | Solvent | Atomic Ratios | | | Partial Pressure Ratio of $H_2$ to $C_2H_4$ | $I_2$ | $I_{20}/I_2$ | Efficiency (Kg Polymer per gram of Ti or Cl) | |
|---|---|---|---|---|---|---|---|---|---|
| | | Catalyst | | Cocat. | | | | | |
| | | Mg/Al/Cl/Ti | Si/Mg | Al/Ti | | | | Ti | Cl |
| A | $n-C_6H_{14}$ | 10/22.5/45/1 | 8.3/1 | 200/1 | 0.36 | 0.19 | 39.5 | 1,020 | 31 |
| B | $i-C_5H_{12}$ | 10/22.5/45/1 | 8.3/1 | 200/1 | 3.0 | 0.67 | 38.5 | 750 | 22 |

EP 0 567 584 B1

## EXAMPLE 7

### A. Preparation of Transition Metal Catalyst Component Containing Vanadium

To 1 g of Silica Support #7 slurried in 50 ml of ISOPAR™ E was added 2.0 mmol of butylethylmagnesium butoxide (BEMB from Texas Alkyls Inc). The resulting slurry was stirred for one hour after which 0.40 mmol of titanium tetrachloride ($TiCl_4$) was added. The slurry rapidly darkens to a deep brown color and was stirred for a further two hours. An aliquot of a solution of ethylaluminum dichloride (3.5 mmol Al) was then added and the final mixture stirred for 17 hours. The mixture was treated with 0.40 mmol of vanadium trichloride oxide ($VOCl_3$) and then stirred for 4 hours. The Mg/Al/Cl/V/Ti atomic ratios of the catalyst was 5/8.8/20.3/1/1. The Si/Mg atomic ratio of the catalyst was 8.3/1.

The catalyst was activated with triisobutylaluminum at an Al/Ti atomic ratio of 100:1.

### B. Polymerization (Slurry Conditions)

The slurry polymerization conditions were employed. The polymerization temperature was 85°C, the hydrogen to ethylene ratio was 2:1, and the polymerization time was one hour.

The polymerization efficiency based on titanium was found to be 952 Kg PE/g Ti and the polymerization efficiency based on chloride was 52 Kg PE/g Cl and the polymerization efficiency based on titanium plus vanadium was 476 Kg PE/g Ti + V.

## EXAMPLE 8

### A. Preparation of Transition Metal Catalyst Component Containing Vanadium

To 1 g of Silica Support #7 slurried in 50 ml of ISOPAR™ E was added 2.0 mmol of butylethylmagnesium butoxide (BEMB from Texas Alkyls Inc.). The resulting slurry was stirred for one hour after which 1.80 mmol of titanium tetrachloride ($TiCl_4$) was added. The slurry rapidly darkened to a deep brown color and was stirred for a further two hours. An aliquot of a solution of ethylaluminum dichloride (3.5 mmol Al) was then added and and the final mixture stirred for 17 hours. The mixture was treated with 0.40 mmol of vanadium trichloride oxide ($VOCl_3$) and then stirred for 4 hours. The Mg/Al/Cl/V/Ti atomic ratios of the catalyst was 1.1/1.9/12.3/0.2/1. The Si/Mg atomic ratio of the catalyst was 8.3/1.

The catalyst was activated with triisobutylaluminum at an atomic ratio of Al/Ti of 100/1.

### B. Polymerization (Slurry Conditions)

The slurry polymerization procedure was employed using a hydrogen to ethylene mole ratio of 1 to 1, a polymerization temperature of 85°C, and a polymerization time of one hour.

The efficiency of the catalyst based on titanium was 571 Kg PE/g Ti/hour and the efficiency based on chloride was 90 Kg PE/g Cl and the efficiency based on titanium plus vanadium was 285 Kg/ g of Ti + V/hour.

## EXAMPLE 9

### A. Preparation of Transition Metal Catalyst Component Containing Vanadium

To 1 g of Silica Support #7 slurried in 50 ml of ISOPAR™ E was added 2.0 mmol of butylethylmagnesium butoxide (BEMB from Texas Alkyls Inc). The resulting slurry was stirred for 1 hour after which 1.00 mmol of titanium tetrachloride (TiCl4) was added. An aliquot of a solution of ethylaluminum dichloride (6.0 mmol Al) was then added and and the final mixture stirred for 17 hours. The mixture was treated with 1.00 mmol of vanadium trichloride oxide ($VOCl_3$) and then stirred for 4 hours. The complete mixtures prepared in this manner were used without further isolation or washing. The Mg/Al/Cl/V/Ti atomic ratios of the catalyst was 2/6/19/1/1. The Si/Mg atomic ratio of the catalyst was 8.3/1.

The catalysts were activated with the cocatalyst designated in Table VII.

B. Polymerization (Slurry Conditions)

The slurry polymerization procedure was employed at a temperature of 85°C, a hydrogen to ethylene ratio of 1:1, and a polymerization time of one hour.

The catalyst efficiency and properties of the resulting polymer are shown in Table VII.

Table VII

| Use of Varying Amounts of Vanadium | | | | | | | |
|---|---|---|---|---|---|---|---|
| Run No. | Cat. No. | Bu₃Al TO Ti Ratio | Efficiency (Kg PE per gram of Ti or Cl) | | | $I_2$ | $I_{20}/I_2$ |
| | | | Ti | Cl | Ti + V | | |
| A | 9A | 100 | 433 | 31 | 216 | 0.12 | 60.0 |
| B | 9B | 200 | 433 | 31 | 216 | 0.12 | 60.3 |
| C | 9C | 50 | 325 | 23 | 163 | 0.09 | 57.8 |

This example 9 shows that high $I_{20}/I_2$ ratios can be achieved with the vanadium containing catalysts in slurry polymerizations. These high $I_{20}/I_2$ ratios were indicative of a broad molecular weight distribution.

## EXAMPLE 10

A. Preparation of Transition Metal Catalyst Component

To 1 g of Silica Support #7 slurried in 50 ml of ISOPAR™ E was added 2.0 mmol of butylethylmagnesium butoxide (BEMB from Texas Alkyls Inc). The resulting slurry was stirred for one hour after which titanium tetraisopropoxide was added in the indicated quantities. The slurry was stirred for a further two hours. An aliquot of a solution of 25percent ethylaluminum dichloride in hexane was then added and the final mixture stirred for 17 hours. The atomic ratios of Mg/Al/Cl/Ti for these catalysts were as follows:
Run A = 7.5/15/30/1
Run B = 3.8/8.8/17.5/1 The atomic ratios of Si/Mg for these catalysts were as follows:
Run A = 8.3/1
Run B = 8.3/1. The catalysts prepared in this manner were used without further isolation or washing.
The catalysts were activated with triethylaluminum at atomic ratios of Al/Ti of 8/1 and 6/1.

B. Polymerization (Solution Conditions)

The catalysts were used to polymerize ethylene using the solution polymerization procedure employing a polymerization temperature of 185°C, and a polymerization time of one hour.

The results are given in Table VIII.

Table VIII

| Run No. | Catalyst (millimoles) | | Cocat. Atomic Ratio Al/Ti | Efficiency (Kg PE per g Ti or Cl) | |
|---|---|---|---|---|---|
| | Ti | Al | | Ti | Cl |
| A | 0.20 | 3.0 | 8 | 773 | 35 |
| B | 0.40 | 3.5 | 6 | 641 | 50 |

**EXAMPLE 11**

A. Preparation of Catalyst

To 1 g of Silica Support #7 slurried in 50 ml of ISOPAR™ E was added the required amount of butylethylmagnesium butoxide (BEMB from Texas Alkyls Inc). The resulting slurry was stirred for one hour after which titanium tetrachloride (TiCl$_4$) was added. An aliquot of a solution of ethylaluminum dichloride (EADC) was then added and the slurry stirred for 17 hours. The mixture was treated with vanadium tetrachloride (VCl$_4$) and then stirred for 4 hours. The complete mixtures prepared in this manner were used without further isolation or washing. The composition of these catalysts are given in Table IX. The atomic ratios are given in Table IX.

B. Activation and Polymerization

After activating the catalysts prepared above with triethylaluminum in the indicated amounts, polymerizations were conducted under solution polymerization conditions at a polymerization temperature of 185°C and a polymerization time of ten minutes.

The results are given in Table IX.

Table IX

| Run No. | mmol BEMB | mmol TiCl₄ | mmol VCl4 | mmol EADC | Atomic Ratios | | Cocat Al/Ti | Density g/cm³ | I₂ | Catalyst Efficiency Kg PE/g Ti or Cl | |
| | | | | | Catalyst Mg/Al/Cl/V/Ti | Si/Mg | | | | Ti | Cl |
|---|---|---|---|---|---|---|---|---|---|---|---|
| A | 1.2 | 0.2 | 0.2 | 1.5 | 6/7.5/23/1/1 | 14/1 | 9.4 | 0.9334 | 3.45 | 552 | 32 |
| B | 1.2 | 0.6 | 0.2 | 1.5 | 2/2.5/10/0.33/1 | 14/1 | 6.2 | 0.9314 | 3.74 | 593 | 77 |
| C | 1.5 | 0.4 | 0.4 | 2.5 | 3.8/6.3/20.5/1/1 | 17/1 | 4.7 | 0.9250 | 1.24 | 1,096 | 72 |
| D | 1.8 | 0.6 | 0.6 | 3.5 | 3/6/20/1/1 | 21/1 | 6.7 | 0.9241 | 1.81 | 1,021 | 70 |
| E | 1.2 | 0.6 | 0.6 | 3.5 | 2/6/20/1/1 | 14/1 | 8.3 | 0.9228 | 1.16 | 958 | 66 |
| F | 1.2 | 1.0 | 1.0 | 3.5 | 1.2/3.5/15/1/1 | 14/1 | 8.3 | 0.9285 | 1.21 | 1,157 | 104 |
| G | 1.2 | 1.2 | 1.2 | 3.5 | 1/3/14/1/1 | 14/1 | 8.3 | 0.9232 | 1.84 | 807 | 79 |
| H | 1.2 | 0.6 | 0.2 | 3.5 | 2/7/19/0.3/1 | 14/1 | 8.3 | 0.9226 | 1.47 | 1,002 | 80 |

**EXAMPLE 12**

A. Preparation of Transition Metal Catalyst Component

To 1 g of Silica Support #7 slurried in 50 ml of ISOPAR™ E was added 1.2 mmol of butylethylmagnesium butoxide (BEMB from Texas Alkyls Inc). The resulting slurry was stirred for one hour after which 0.60 mmol of titanium tetrachloride (TiCl₄) was added. The slurry rapidly darkens to a deep brown color and was stirred for a further two hours. An aliquot of a solution of ethylaluminum dichloride (3.5 mmol Al) was then added and the final mixture was stirred for 17 hours. The mixture was treated with 0.60 mmol of vanadium trichloride oxide (VOCl₃) and then stirred for 4 hours.

The catalyst had the following ratios:
Mg/Al/Cl/V/Ti of 2/5.8/18/1/1
Si/Mg of 13.9/1

B. Activation and Polymerization Under Solution Conditions

After activating the catalyst with triethylaluminum (Al/Ti = 5/1) the polymerization was conducted using the solution polymerization procedure.

The polymer product had a density of 0.9239 g/cm³ and an I₂ value of 2.36 and was produced at an efficiency of 790 Kg PE/g Ti and 57 Kg PE/g Cl.

EXAMPLE 13

A. Preparation of Transition Metal Catalyst Component

To 1 gram of Silica Support #7 in ISOPAR™ E was added 1.2 mmol of butylethylmagnesium butoxide. After stirring the mixture for two hours, 3.5 mmol of ethylaluminum dichloride was added and the mixture was stirred for 17 hours. To this mixture was then added a 1:1 molar mixture of TiCl₄ and VOCl₃ (.6 mmol Ti/.6 mmol V). This mixture was stirred for 8 hours.

The catalyst had the following ratios:
Mg/Al/Cl/V/Ti of 2/5.8/18/1/1; and
Si/Mg of 13.9/1.

B. Activation of Catalyst and Polymerization Under Solution Conditions

After activating the catalyst with triethylaluminum (Al/Ti = 5/1), the polymerization was conducted using the solution polymerization procedure.

The polymer product had an efficiency of 742 Kg PE/g Ti and 54 Kg PE/g Cl.

**EXAMPLE 14**

A. Preparation of Transition Metal Catalyst Component

To 1 g of Silica Support Sample #7 slurried in ISOPAR™ E was added 2.0 mmol of butylethylmagnesium butoxide, 1.8 mmol titanium tetrachloride and 1.8 mmole of vanadium trichloride oxide and the mixture was stirred for 4 hours. The mixture was then treated with 6.5 mmol of ethylaluminum dichloride and the slurry stirred for 24 hours. The atomic ratios of Mg/Al/Cl/Ti/V for this catalyst were 1.1/3.6/13/1/1.

B. Activation of Catalyst and Polymerization

An aliquot of the catalyst was diluted and activated according to Example 1B using a triethylaluminum to titanium ratio of 8.5:1. The polymerization was carried out according to the procedure for solution process polymerizations at the temperatures shown in Table X.

Table X

| Run No. | Run Temp. °C | Density g/cm$^3$ | I$_2$ | Efficiency (Kg PE per gram of Ti or Cl) | |
|---|---|---|---|---|---|
| | | | | Ti | Cl |
| A | 185 | 0.9251 | 0.81 | 945 | 98 |
| B | 215 | 0.9259 | 0.71 | 319 | 33 |

EXAMPLE 15

A. Preparation of Transition Metal Catalyst Component

To 1 g of Silica Support #7 slurried in Isopar™ E was added 2.0 mmol of magnesium bis(2,6-dimethylcyclohexoxide), 0.2 mmol titanium tetrachloride and the mixture was stirred for 1 hour. The mixture was then treated with 5.5 mmol of ethylaluminum dichloride and the slurry stirred for 24 hours. The atomic ratio of Mg/Al/Cl/Ti for this catalyst was 10/27.5/59/1.

B. Activation of Catalyst and Polymerization

An aliquot of the catalyst was diluted and activated according to Example 1B using a triethylaluminum to titanium ratio of 12:1. The polymerization was carried out according to the procedure for solution process polymerizations at 185°C. The polymer product had a density of 0.9332 g/cm$^3$ and an I$_2$ value of 2.42 g/10 min, an I$_{10}$/I$_2$ ratio of 8.00 and was produced at an efficiency of 149 Kg PE/g Ti and 3.4 Kg PE/g Cl.

**Claims**

1. A supported transition metal catalyst component which comprises an inert liquid medium having slurried therein a composition comprising the product resulting from contacting (1) a porous solid inorganic oxide support material selected from the group consisting of silica, alumina, or a combination of silica and alumina; (2) a hydrocarbon soluble organomagnesium alkoxide or hydrocarbon soluble organomagnesium dialkoxide; (3) a titanium compound; optionally (4) a vanadium compound; and (5) a Group IIIA metal alkyl halide;
   **characterized in that**
   (i) the composition is employed without washing and solids removal;
   (ii) said support material contains not greater than 5 millimoles of hydroxyl groups per gram of support material and a particle size not greater than 10 $\mu$m and a surface area of from 50 to 800 m$^2$/g;
   (iii) .the atomic ratio of Si + Al(from the inorganic oxide support): Mg is from 1:1 to 50:1;
   (iv) the atomic ratio of Mg:IIIA metal is from 0.01:1 to 100:1
   (v) the atomic ratio of Mg:Ti is from 0.05:1 to 40:1;
   (vi) the atomic ratio of Mg:V, when V is present, is from about 0.1:1 to 40:1; and
   (vii) the atomic ratio of V:Ti, when V is present, is from 0:1 to 10:1.

2. A catalyst component of Claim 1 wherein
   (a) said solid support material is silica:
   (b) said organomagnesium alkoxide or dialkoxide is a compound represented by the formulas R$_x$Mg-(OR)$_y$: wherein each R is independently a hydrocarbyl group having from 1 to 20 carbon atoms, x + y = 2, 0.5≦y≦2;
   (c) said titanium compound is a compound represented by the formula TiX$_{4-a}$(OR')$_a$ wherein each R' is independently an alkyl group having from 1 to 20 carbon atoms, X is a halogen atom, and a has a value from zero to 4;
   (d) said vanadium compound, when present, is a compound represented by the formula VX$_{4-a}$(OR')$_a$ wherein each R' is independently an alkyl group having from 1 to 20 carbon atoms, X is a halogen atom, and a has a value from zero to 4; and
   (e) said Group IIIA metal alkyl halide is a compound represented by the formula R'$_y$MX$_z$ wherein M is a metal from Group IIIA of the Periodic Table of the Elements, each R' is independently an alkyl group having from 1 to 20 carbon atoms; X is a halogen atom, y and z each independently have a value from 1 to a value equal to the valence of M minus 1 and y + z has a value equal to the valence of M.

3. A catalyst component of Claim 1 wherein
   (a) said solid support material is silica;
   (b) said magnesium compound is ethylmagnesium ethoxide, butylmagnesium ethoxide, octylmagnesium ethoxide, butylmagnesium butoxide, ethylmagnesium butoxide, butylmagnesium octoxide, s-butylmagnesium octoxide or any combination of such compounds;
   (c) said titanium compound is titanium tetrachloride, titanium tetraisopropoxide, or any combination of such compounds;
   (d) said vanadium compound, when present, is vanadium tetrachloride, vanadium oxytrichloride, or any combination of such compounds; and
   (e) said Group IIIA metal alkyl halide is ethylaluminum dichloride, i-butylaluminum dichloride, ethylaluminum sesquichloride or any combination thereof.

4. A process for preparing a supported transition metal catalyst component slurried in an inert liquid medium,
   **charachterized by**
   (A) forming in an inert atmosphere which excludes oxygen and moisture a slurry of (1) a porous inorganic oxide support material selected from the group consisting of silica, alumina, or a combination of silica and alumina, said support material containing not greater than 5 millimoles of hydroxyl groups per gram of support material and a particle size not greater than 10 microns and a surface area of from 50 to 800 $m^2/g$ in an inert organic liquid medium;
   (B mixing said slurry with (2) a hydrocarbon soluble organomagnesium alkoxide or hydrocarbon soluble organomagnesium dialkoxide and stirring the resultant mixture at a temperature of from -20°C to 120°C;
   (C) mixing the product from (B) with (3) a titanium compound or a combination of a titanium compound and (4) a vanadium compound or adding the titanium compound and the vanadium compound separately and stirring the resultant mixture at a temperature of from -20°C to 120°C for a time sufficient to allow complete reaction of the titanium compound and the vanadium compound with the organomagnesium moieties remaining on the solid support;
   (D) mixing the product from (C) with an inert organic solution of (5) a Group IIIA metal alkyl halide at a temperature of from -20°C to 120°C for a time sufficient to complete the reduction of the titanium and vanadium, if present, compounds to their final oxidation state.

5. A process of Claim 4 wherein
   (a) said solid support material is silica;
   (b) said organomagnesiumalkoxide or organo magnesium dialkoxide is a compound represented by the formulas $R_xMg(OR)_y$; wherein each R is independently a hydrocarbyl group having from 1 to 20 carbon atoms, x + y = 2, and $0.5 \leq y \leq 2$;
   (c) said titanium compound is a compound represented by the formula $TiX_{4-a}(OR')_a$ wherein each R' is independently an alkyl group having from 1 to 20 carbon atoms, X is a halogen atom, and a has a value from zero to 4;
   (d) said vanadium compound, when present, is a compound represented by the formula $VX_{4-a}(OR')_a$ wherein each R' is independently an alkyl group having from 1 to 20 carbon atoms, X is a halogen atom, and a has a value from zero to 4; and
   (e) said Group IIIA metal alkyl halide is a compound represented by the formula $R'_yMX_z$ wherein M is a metal from Group IIIA of the Periodic Table of the Elements, each R' is independently an alkyl group having from 1 to 20 carbon atoms; X is a halogen atom, y and z each independently have a value from 1 to a value equal to the valence of M minus 1 and y + z has a value equal to the valence of M.

6. A process of Claim 5 wherein
   (a) said magnesium compound is ethylmagnesium ethoxide. butylmagnesium ethoxide, octylmagnesium ethoxide, butylmagnesium butoxide, ethylmagnesium butoxide, butylmagnesium octoxide, s-butylmagnesium octoxide or any combination of such compounds;

(b) said titanium compound is titanium tetrachloride, titanium tetraisopropoxide, or any combination of such compounds;

(c) said vanadium compound, when present is vanadium tetrachloride, vanadium oxytrichloride, or any combination of such compounds; and

(d) said Group IIIA metal alkyl halide is ethylaluminum dichloride, i-butylaluminum dichloride, ethylaluminum sesquichloride or any combination of such compounds.

7. A process for polymerizing one or more α-olefins and optionally one or more polymerizable ethylenically unsaturated compounds other than an α-olefin by subjecting said olefins and/or compounds to polymerization conditions in the presence of a catalyst, **characterized by**
employing as the catalyst, (A) any of the catalyst components of the Claims 1-3 or any one of the catalyst components prepared by the process of Claims 4-6 and either or not (B) a cocatalyst or activator for component (A).

**Patentansprüche**

1. Übergangsmetall-Trägerkatalysatorkomponente, umfassend ein inertes flüssiges Medium mit einer darin aufgeschlämmten Zusammensetzung, umfassend das Produkt, welches aus dem Kontaktieren von (1) einem porösen, festen, anorganischen Oxidträgermaterial, ausgewählt aus der, aus Siliciumdioxid, Aluminiumoxid oder einer Kombination von Siliciumdioxid und Aluminiumoxid, bestehenden Gruppe, (2) einem in Kohlenwasserstoff löslichen Organomagnesiumalkoxid oder in Kohlenwasserstoff löslichen Organomagnesiumdialkoxid, (3) einer Titanverbindung, gegebenfalls (4) einer Vanadiumverbindung und (5) einem Gruppe-IIIA-Metallalkylhalogenid, resultiert,
dadurch gekennzeichnet, daß
(i) die Zusammensetzung verwendet wird ohne Waschen und Feststoffentfernung,
(ii) das Trägermaterial nicht mehr als 5 Millimol Hydroxylgruppen pro Gramm Trägermaterial enthält und eine Teilchengröße von nicht größer als 10 $\mu$m und eine Oberfläche von 50-800m$^2$/g aufweist,
(iii) das Atomverhältnis von Si + Al (aus dem anorganischen Trägermaterial): Mg von 1:1 bis 50:1 ist,
(iv) das Atomverhältnis von Mg:IIIA-Metall von 0,01:1 bis 100:1 ist,
(v) das Atomverhältnis von Mg:Ti von 0,05:1 bis 40:1 ist,
(vi) das Atomverhältnis von Mg:V, wenn V vorliegt, etwa 0,1:1 bis 40:1 ist und
(vii) das Atomverhältnis von V:Ti, wenn V vorliegt, von 0:1 bis 10:1 ist.

2. Katalysatorkomponente nach Anspruch 1, worin
(a) das feste Trägermaterial Siliciumdioxid ist,
(b) das Organomagnesiumalkoxid oder -dialkoxid eine durch die Formeln $R_xMg(OR)_y$ dargestellte Verbindung ist, worin jedes R unabhängig eine Hydrocarbylgruppe mit 1 bis 20 Kohlenstoffatomen, x + y = 2, 0,5 $\leq$ y $\leq$ 2 ist,
(c) die Titanverbindung eine durch die Formel $TiX_{4-a}(OR')_a$ dargestellte Verbindung ist, worin jedes R' unabhängig eine Alkylgruppe mit 1 bis 20 Kohlenstoffatomen ist, X ein Halogenatom ist und a einen Wert von 0 bis 4 hat,
(d) die Vanadiumverbindung, wenn sie vorliegt, eine durch die Formeln $VX_{4-a}(OR')_a$ dargestellte Verbindung ist, worin jedes R' unabhängig eine Alkylgruppe mit 1 bis 20 Kohlenstoffatomen ist, X ein Halogenatom ist und a einen Wert von 0 bis 4 hat und
(e) das Gruppe-IIIA-Metallalkylhalogenid eine durch die Formel $R'_yMX_z$ dargestellte Verbindung ist, worin M ein Metall aus der Gruppe IIIA des Periodensystem der Elemente ist, jedes R' unabhängig eine Alkylgruppe mit 1 bis 20 Kohlenstoffatomen ist, X ein Halogenatom ist, y und z jeweils unabhängig einen Wert von 1 bis zu einem Wert gleich der Valenz von M minus 1 haben und y + z einen Wert gleich der Valenz von M hat.

3. Katalysatorkomponente nach Anspruch 1, worin
(a) das feste Trägermaterial Siliciumdioxid ist,
(b) die Magnesiumverbindung Ethylmagnesiumethoxid, Butylmagnesiumethoxid, Octylmagnesiumethoxid, Butylmagnesiumbutoxid, Ethylmagnesiumbutoxid, Butylmagnesiumoctoxid, s-Butylmagnesiumoctoxid oder eine beliebige Kombination derartigeer Verbindungen ist,
(c) die Titanverbindung Titantetrachlorid, Titantetraisopropoxid, oder eine beliebige Kombination derartiger Verbindungen ist,

EP 0 567 584 B1

(d) die Vanadiumverbindung, wenn sie vorliegt, Vanadiumtetrachlorid, Vanadiumoxytrichlorid oder eine beliebige Kombination derartiger Verbindungen ist und

(e) das Gruppe-IIIA-Metallalkylhalogenid Ethylaluminiumdichlorid, i-Butylaluminiumdichlorid, Ethylaluminiumsesquichlorid oder eine beliebige Kombination davon ist.

4. Verfahren zur Herstellung einer in einem flüssigen Medium aufgeschlämmten Übergangsmetallträger-Katalysatorkomponente, gekennzeichnet durch

(A) Bilden einer Aufschlämmung von (1) einem porösen, anorganischen Oxidträgermaterial, ausgewählt aus der, aus Siliciumdioxid, Aluminiumoxid, oder einer Kombination von Siliciumdioxid und Aluminiumoxid, bestehenden Gruppe in einer inerten Atmosphäre, welche Sauerstoff und Feuchtigkeit ausschließt, wobei das Trägermaterial nicht mehr als 5 Millimol Hydroxylgruppen pro Gramm Trägermaterial und eine Teilchengröße von nicht größer als 10 $\mu$m und eine Oberfläche von 50 bis 800 m$^2$/g enthält, in einem inerten, organischen, flüssigen Medium,

(B) Mischen der Aufschlämmung mit (2) einem in Kohlenwasserstoff löslichen Organomagnesiumalkoxid oder in Kohlenwasserstoff löslichen Organomagnesiumdialkoxid und Rühren des resultierenden Gemischs bei einer Temperatur von -20 °C bis 120 °C,

(C) Mischen des Produkts von (B) mit (3) einer Titanverbindung oder einer Kombination von einer Titanverbindung und (4) einer Vanadiumverbindung oder getrenntes Zugeben der Titanverbindung und der Vanadiumverbindung und Rühren des resultierenden Gemischs bei einer Temperatur von -20 °C bis 120 °C für eine Zeit, die ausreichend ist, um eine vollständige Reaktion von der Titanverbindung und der Vanadiumverbindung mit den auf dem festen Träger verbleibenden Organomagnesiumanteilen zu erlauben,

(D) Mischen des Produkts von (C) mit einer inerten organischen Lösung von (5) einem Gruppe-IIIA-Metallalkylhalogenid, bei einer Temperatur von -20 °C bis 120 °C, für eine Zeit, die ausreichend ist, um die Reduktion der Titan- und, falls vorliegend, der Vanadiumverbindungen zu ihrer Endoxidationsstufe zu vervollständigen.

5. Verfahren nach Anspruch 4, worin

(a) das feste Trägermaterial Siliciumdioxid ist,

(b) das Organomagnesiumalkoxid oder Organomagnesiumdialkoxid eine durch die Formeln $R_xMg(OR)_y$ dargestellte Verbindung ist, worin jedes R unabhängig eine Hydrocarbylgruppe mit 1 bis 20 Kohlenstoffatomen ist, $x + y = 2$ und $0,5 \leq y \leq 2$ ist,

(c) die Titanverbindung eine durch die Formel $TiX_{4-a}(OR')_a$ dargestellte Verbindung ist, worin jedes R' unabhängig eine Alkylgruppe mit 1 bis 20 Kohlenstoffatomen ist, X ein Halogenatom ist und a einen Wert von 0 bis 4 hat,

(d) die Vanadiumverbindung, wenn sie vorliegt, eine durch die Formel $VX_{4-a}(OR')_a$ dargestellte Verbindung ist, worin jedes R' unabhängig eine Alkylgruppe mit 1 bis 20 Kohlenstoffatomen ist, X ein Halogenatom ist und a einen Wert von 0 bis 4 hat und

(e) das Gruppe-IIIA-Metallalkylhalogenid eine durch die Formel $R'_yMX_z$ dargestellte Verbindung ist, worin M ein Metall aus der Gruppe IIIA des Periodensystem der Elemente ist, jedes R' unabhängig eine Alkylgruppe mit 1 bis 20 Kohlenstoffatomen ist, X ein Halogenatom ist, y und z jeweils unabhängig einen Wert von 1 bis zu einem Wert gleich der Valenz von M minus 1 haben und y + z einen Wert gleich der Valenz von M hat.

6. Verfahren nach Anspruch 5, worin

(a) die Magnesiumverbindung Ethylmagnesiumethoxid, Butylmagnesiumethoxid, Octylmagnesiumethoxid, Butylmagnesiumbutoxid, Ethylmagnesiumbutoxid, Butylmagnesiumoctoxid, s-Butylmagnesiumoctoxid oder eine beliebige Kombination derartiger Verbindungen ist,

(b) die Titanverbindung Titantetrachlorid, Titantetraisopropoxid, oder eine beliebige Kombination derartiger Verbindungen ist,

(c) die Vanadiumverbindung, wenn sie vorliegt, Vanadiumtetrachlorid, Vanadiumoxytrichlorid oder eine beliebige Kombination derartiger Verbindungen ist und

(d) das Gruppe-IIIA-Metallalkylhalogenid Ethylaluminiumdichlorid, i-Butylaluminiumdichlorid, Ethylaluminiumsesquichlorid oder eine beliebige Kombination derartiger Verbindungen ist.

7. Verfahren zum Polymersiieren von einem oder mehreren $\alpha$-Olefinen und gegebenfalls einer oder mehrerer ethylenisch ungesättigter Verbindungen, welche anders als ein $\alpha$-Olefin sind, durch Aussetzen des Olefins und/oder der Verbindungen Polymerisationsbedingungen in der Gegenwart eines Katalysa-

24

tors, gekennzeichnet durch Verwenden als der Katalysator von (A) eine der Katalysatorkomponenten der Ansprüche 1 bis 3 oder eine der, gemäß dem Verfahren der Ansprüche 4 bis 6 hergestellten Katalysatorkomponenten und gegebenenfalls (B) einen Cokatalysator oder Aktivator für Komponente (A).

**Revendications**

1. Composant catalytique supporté à base de métal transition, qui comporte un milieu liquide inerte dans lequel est mise en suspension une composition comprenant le produit résultant de la mise en contact (1) d'un matériau solide et poreux de support, oxyde inorganique choisi dans l'ensemble constitué par de la silice, de l'alumine et une combinaison de silice et d'alumine, (2) d'un alcoxyde organomagnésien soluble dans les hydrocarbures ou d'un dialcoxyde organomagnésien soluble dans les hydrocarbures, (3) d'un composé du titane, (4) éventuellement d'un composé du vanadium, et (5) d'un halogénure d'alkyl-(métal du groupe IIIA), caractérisé en ce que

i) la composition est employée sans lavage ni élimination des matières solides,

ii) ledit matériau de support ne contient pas plus de 5 millimoles de groupes hydroxy par gramme de matériau de support, la taille des particules de ce matériau vaut au plus 10 $\mu$m et son aire spécifique vaut de 50 à 800 m$^2$/g,

iii) le rapport atomique (Si + Al provenant de l'oxyde inorganique employé comme support)/Mg vaut de 1/1 à 50/1,

iv) le rapport atomique Mg/(métal du groupe IIIA) vaut de 0,01/1 à 100/1,

v) le rapport atomique Mg/Ti vaut de 0,05/1 à 40/1,

vi) le rapport atomique Mg/V, s'il y a du vanadium, vaut d'environ 0,1/1 à 40/1, et

vii) le rapport atomique V/Ti, s'il y a du vanadium, vaut de 0/1 à 10/1.

2. Composant catalytique conforme à la revendication 1, dans lequel

a) ledit matériau solide de support est de la silice,

b) ledit alcoxyde ou dialcoxyde organomagnésien est un composé représenté par la formule R$_x$Mg-(OR)$_y$ dans laquelle chaque R représente indépendamment un groupe hydrocarboné comportant de 1 à 20 atomes de carbone, x + y = 2 et 0,5 $\leq$ y $\leq$ 2,

c) ledit composé du titane est un composé représenté par la formule TiX$_{4-a}$(OR')$_a$ dans laquelle chaque R' représente indépendamment un groupe alkyle comportant de 1 à 20 atomes de carbone, X représente un atome d'halogène et a est un nombre valant de 0 à 4,

d) ledit composé du vanadium, s'il y en a, est un composé représenté par la formule VX$_{4-a}$(OR')$_a$ ou dans laquelle chaque R' represente indépendamment un groupe alkyle comportant de 1 à 20 atomes de carbone, X représente un atome d'halogène et a est un nombre valant de 0 à 4, et

e) ledit halogénure d'alkyl-(métal du groupe IIIA) est un composé représenté par la formule R'$_y$MX$_z$ dans laquelle M représente un métal du groupe IIIA du Tableau Périodique des Eléments, chaque R' représente indépendamment un groupe alkyle comportant de 1 à 20 atomes de carbone, X représente un atome d'halogène, et y et z représentent des nombres valant chacun, indépendamment, de 1 à la valence de M diminuée de 1, la somme y + z étant égale à la valence de M.

3. Composant catalytique conforme à la revendication 1, dans lequel

a) ledit matériau solide de support est de la silice,

b) ledit composé du magnésium est de l'éthoxyde d'éthylmagnésium, de l'éthoxyde de butylmégnésium, de l'éthoxyde d'octylmagnésium, du butoxyde de butylmagnésium, du butoxyde d'éthylmagnésium, de l'octoxyde de butylmagnésium, de l'octoxyde de s-butylmagnésium, ou n'importe quelle combinaison de ces composés,

c) ledit composé du titane est du tétrachlorure de titane, du tétraisopropoxyde de titane, ou n'importe quelle combinaison de ces composés,

d) ledit composé du vanadium, s'il y en a, est du tétrachlorure de vanadium, de l'oxytrichlorure de vanadium, ou n'importe quelle combinaison de ces composés, et

e) ledit halogénure d'alkyl-(métal du groupe IIIA) est du dichlorure d'éthyl-aluminium, du dichlorure d'isobutyl-aluminium, du sesquichlorure d'éthyl-aluminium, ou n'importe quelle combinaison de ces composés.

4. Procédé de préparation d'un composant de catalyseur supporté à base de métal de transition, en suspension dans un milieu liquide inerte,

caractérisé en ce que

A) on forme, sous atmosphère inerte excluant oxygène et humudité, une suspension de (1) un matériau solide et poreux de support, oxyde inorganique choisi dans l'ensemble constitué par de la silice, de l'alumine et une combinaison de silice et d'alumine, ledit matériau de support ne contenant pas plus de 5 millimoles de groupes hydroxy par gramme de matériau de support, la taille des particules de ce matériau valant au plus 10 $\mu$m et son aire spécifique valant de 50 à 800 m$^2$/g, dans un milieu liquide organique inerte,

B) on mélange cette suspension avec (2) un alcoxyde organomagnésien soluble dans les hydrocarbures ou un dialcoxyde organomagnésien soluble dans les hydrocarbures, et on agite le mélange résultant à une température valant de -20°C à 120°C,

C) on mélange le produit de l'opération (B) avec (3) un composé du titane ou une combinaison d'un composé du titane et (4) d'un composé du vanadium, ou on ajoute séparément un composé du titane et un composé du vanadium, et on agite le mélange résultant à une température valant de -20°C à 120°C, pendant suffisamment longtemps pour laisser se terminer la réaction du composé du titane et du composé du vanadium avec les fragments organomagnésiens restant sur le support solide,

D) on mélange le produit de l'opération (C) avec une solution (5) d'un halogénure d'alkyl-(métal du groupe IIIA) dans un solvant organique inerte, à une température valant de -20°C à 120°C, pendant suffisamment longtemps pour laisser se terminer la réduction du composé du titane, et du composé du vanadium s'il y en a, jusqu'à leur état final d'oxydation.

5. Procédé conforme à la revendication 4, dans lequel

a) ledit matériau solide de support est de la silice,

b) ledit alcoxyde ou dialcoxyde organomagnésien est un composé représenté par la formule R$_x$Mg-(OR)$_y$ dans laquelle chaque R représente indépendamment un groupe hydrocarboné comportant de 1 à 20 atomes de carbone, x + y = 2 et 0,5 ≤ y ≤ 2,

c) ledit composé du titane est un composé représenté par la formule TiX$_{4-a}$(OR')$_a$ dans laquelle chaque R' représente indépendamment un groupe alkyle comportant de 1 à 20 atomes de carbone, X représente un atome d'halogène et a est un nombre valant de 0 à 4,

d) ledit composé du vanadium, s'il y en a, est un composé représenté par la formule VX$_{4-a}$(OR')$_a$ dans laquelle chaque R' représente indépendamment un groupe alkyle comportant de 1 à 20 atomes de carbone, X représente un atome d'halogène et a est un nombre valant de 0 à 4, et

e) ledit halogénure d'alkyl-(métal du groupe IIIA) est un composé représenté par la formule R'$_y$MX$_z$ dans laquelle M représente un métal du groupe IIIA du Tableau Périodique des Eléments, chaque R' représente indépendamment un groupe alkyle comportant de 1 à 20 atomes de carbone, X représente un atome d'halogène, et y et z représentent des nombres valant chacun, indépendamment, de 1 à la valence de M diminuée de 1, la somme y + z étant égale à la valence de M.

6. Procédé conforme à la revendication 5, dans lequel

a) ledit composé du magnésium est de l'éthoxyde d'éthylmagnésium, de l'éthoxyde de butylmégnésium, de l'éthoxyde d'octylmagnésium, du butoxyde de butylmagnésium, du butoxyde d'éthylmagnésium, de l'octoxyde de butylmagnésium, de l'octoxyde de s-butylmagnésium, ou n'importe quelle combinaison de ces composés,

b) ledit composé du titane est du tétrachlorure de titane, du tétraisopropoxyde de titane, ou n'importe quelle combinaison de ces composés,

c) ledit composé du vanadium, s'il y en a, est du tétrachlorure de vanadium, de l'oxytrichlorure de vanadium, ou n'importe quelle combinaison de ces composés, et

d) ledit halogénure d'alkyl-(métal du groupe IIIA) est du dichlorure d'éthyl-aluminium, du dichlorure d'isobutyl-aluminium, du sesquichlorure d'éthyl-aluminium, ou n'importe quelle combinaison de ces composés.

7. Procédé de polymérisation d'une ou plusieurs alpha-oléfines et, éventuellement, d'un ou plusieurs composés polymérisables à insaturation éthylénique, autres que des alpha-oléfines, dans lequel on soumet les oléfines et/ou les composés à des conditions de polymérisation, en présence d'un catalyseur, caractérisé en ce que l'on emploie, en tant que catalyseur,

(A) l'un des composants catalytiques conformes à l'une des revendications 1 à 3 ou l'un des composants catalytiques préparés selon un procédé conforme à l'une des revendications 4 à 6, avec ou sans

(B) un cocatalyseur ou un promoteur pour le composant (A).